# DEMANDE DE BREVET EUROPEEN

(11) **EP 1 881 310 A1**
(43) Date de publication de la demande: **23.01.2008**
(21) Numéro de dépôt: 07356094.8
(22) Date de dépôt: 18.07.2007
(51) Int. Cl.: G01K 5/48, G05D 23/13

(54) **Elément thermostatique à réponse rapide, ainsi que cartouche et robinet équipés d'un tel élément**

(30) Priorité: 19.07.2006 FR 0606569
(71) Demandeur: Vernet, 91340 Ollainville (FR)
(72) Inventeur: Draber, Matthieu, 91490 Milly la Forêt (FR)
(74) Mandataire: Grand, Guillaume

(57) **Abrégé**

Cet élément thermostatique comporte une coupelle (1), contenant un mélange (3) dilatable et contractible en fonction du sens de variation de sa température, et un piston (5), mobile par rapport à la coupelle et couplé au mélange pour se déplacer en des sens opposés selon que le mélange se dilate ou se contracte. Pour réduire significativement le temps de réponse de cet élément de manière fiable, le mélange comporte une matrice thermodilatable (31) et des nanotubes (33), en particulier des nanotubes de carbone.

## Description

La présente invention concerne un élément thermostatique, du type défini par le préambule de la revendication 1. L'invention concerne également une cartouche et un robinet thermostatique équipés d'un tel élément.

Ce type d'élément thermostatique est utilisé notamment dans le domaine du réglage de la température d'un fluide issu du mélange de deux courants de fluide à des températures différentes, le mouvement relatif du piston et de la coupelle étant mis en oeuvre pour modifier la proportion du mélange des deux courants de fluide. C'est notamment le cas dans les cartouches de robinet mitigeur et dans les robinets mitigeurs, en particulier pour bain ou bouche.

Pour un grand nombre d'applications dans ce domaine, il est nécessaire que la réponse de l'élément thermostatique soit très rapide, c'est-à-dire que la modification de la température du milieu dans lequel se trouve la coupelle entraîne à très bref délai un mouvement correspondant du piston. Cela est particulièrement le cas pour les éléments thermostatiques plongés dans un courant d'eau d'alimentation d'une installation sanitaire, application pour laquelle, une température idéale étant sélectionnée, une baisse de température de trois ou quatre degrés seulement est très désagréable, et une augmentation de quelques degrés peut être la cause de brûlures.

Les éléments thermostatiques utilisés classiquement dans ce type d'application reposent sur l'utilisation, en temps que matière remplissant leur coupelle, d'une cire dont le coefficient de dilation est très important par rapport à celui des fluides communs, d'environ dix à vingt fois supérieur. Cette cire est donc très dilatable et contractile en fonction des variations de température, notamment autour d'une température fonctionnelle, et ainsi susceptible de provoquer un mouvement très ample du piston de l'élément thermostatique. Toutefois, ce genre de cire a une très faible conductibilité thermique, typiquement environ mille fois inférieure à celle du cuivre. Dans ces conditions, la température de la masse entière de la cire ne reflète qu'imparfaitement et avec un grand retard celle du fluide dans lequel baigne la coupelle.

Pour contourner en partie cette inconvénient, on a proposé, par le passé, de mélanger à la cire une poudre de particules métalliques, notamment de cuivre pelliculaire, présentant une granulométrie appropriée selon laquelle la dimension transversale moyenne des particules est supérieure à 40 micromètres. Par un effet de mélange binaire classique, la bonne conductibilité thermique des particules métalliques permet d'augmenter la conductibilité thermique du mélange ainsi obtenu. Cependant, en pratique, cet artifice est insuffisant pour obtenir un élément thermostatique à réponse rapide utilisable sans précaution particulière dans une installation sanitaire.

Pour atteindre des performances satisfaisantes en terme de temps de réponse, on a proposé, notamment dans FR-A-2 775 780 et dans EP-A-0 967 536, de rapporter, à l'intérieur de la coupelle de l'élément thermostatique, un insert métallique en contact avec la paroi périphérique de la coupelle. De la sorte, la chaleur de cette paroi périphérique est transmise plus rapidement à cet insert qu'à la cire, cette dernière étant alors chauffée par l'insert en complément de son chauffage par la paroi périphérique. Cependant, la mise en place d'un tel insert rapporté se révèle être une opération complexe, qui nécessite une attention particulière pour s'assurer d'un contact suffisant et stable entre l'insert et la paroi de la coupelle.

Le but de la présente invention est de proposer un élément thermostatique à réponse rapide, qui soit tout aussi efficace, en terme de temps de réponse, qu'un élément thermostatique à insert interne rapporté, mais qui soit plus fiable et de fabrication plus simple.

A cet effet, l'invention a pour objet un élément thermostatique tel que défini à la revendication 1.

Dans le cadre de l'invention, l'expression « nanotube » désigne une structure cristalline particulière, de forme tubulaire, creuse et close, dont le diamètre est de l'ordre de quelques nanomètres et d'au plus une cinquantaine de nanomètres. Cette structure cylindrique est composée d'atomes disposés régulièrement, généralement en pentagone, en hexagone et/ou en heptagone, formant un tube dit « chaise », « zigzag » ou « chiral ».

Relevant du domaine des nanotechnologies, qui est éloigné de celui de la régulation de fluide en général et du domaine sanitaire en particulier, les nanotubes ont été découverts il n'y a que quelques années et la quantification de leurs propriétés reste encore aujourd'hui relativement imprécise. Selon l'invention, il est mis en évidence un effet notable sur le temps de réponse d'un élément thermostatique lorsque de tels nanotubes sont mélangés à une matrice thermodilatable, c'est-à-dire une matrice à fort coefficient de dilatation, telle que les cires actuellement utilisées dans les éléments thermostatiques existants. Cet effet surpasse de manière significative l'amélioration des performances des éléments thermostatiques à cire mélangée avec une poudre métallique, comme évoqué ci-dessus, étant remarqué que cet effet va au-delà de ce qui pouvait être prévu par comparaison au mélange connu de cire et de poudre métallique. Plusieurs raisons peuvent être avancées pour expliquer, au moins partiellement, un tel effet notable : en plus de présenter une conductivité thermique et une surface spécifique d'au moins environ dix fois celles des meilleures poudres de cuivre actuellement à disposition, les nanotubes entrent en contact intime avec la matrice thermodilatable, à un niveau atomique ou, tout du moins, à l'échelle du nanomètre. Le transfert de chaleur au sein de la matrice semble ainsi pouvoir être réalisé au niveau atomique par les nanotubes, permettant une homogénéisation particulièrement rapide de la masse du mélange lors du refroidissement ou de l'échauffement de la coupelle de l'élément thermostatique. Ce dernier présente alors un temps de réponse extrêmement court, compatible avec une utilisation sûre dans le domaine sanitaire.

Par ailleurs, la structure cristalline cylindrique des nanotubes apporte un effet lubrifiant à la matrice, ce qui offre donc l'avantage de limiter les frottements internes au mélange lors de ses variations de volume et ce qui diminue par conséquent l'hystérésis de l'élément thermostatique lors d'un cycle de dilatation-contraction du mélange. En service, la fiabilité de l'élément est ainsi améliorée et son comportement est stable dans le temps.

Un autre avantage lié à la présence des nanotubes concerne la limitation de la séparation du mélange. La faible taille et la faible densité apparente des nanotubes limitent leur séparation de la matrice au sein du mélange, à la différence de ce qu'on constate avec des mélanges incluant des poudres de particules métalliques, au sein desquels les poudres se séparent de la matrice par effet de gravité et en raison des flux de matière lors des cycles successifs de dilatation-contraction. Les caractéristiques de bonne conduction thermique sont ainsi maintenues dans le temps pour l'élément selon l'invention.

D'autres caractéristiques de cet élément thermostatique, prises isolément ou suivant toutes les combinaisons techniquement possibles, sont énoncées aux revendications dépendantes 2 à 9.

L'invention a également pour objet une cartouche thermostatique ou un robinet thermostatique, muni d'un élément thermostatique tel que défini ci-dessus.

L'invention sera mieux comprise à la lecture de la description qui va suivre, donnée uniquement à titre d'exemple et faite en se référant aux dessins sur lesquels :
- la figure 1 est une coupe longitudinale d'un élément thermostatique conforme à l'invention ; et
- la figure 2 est une vue schématique du détail cerclé II à la figure 1.

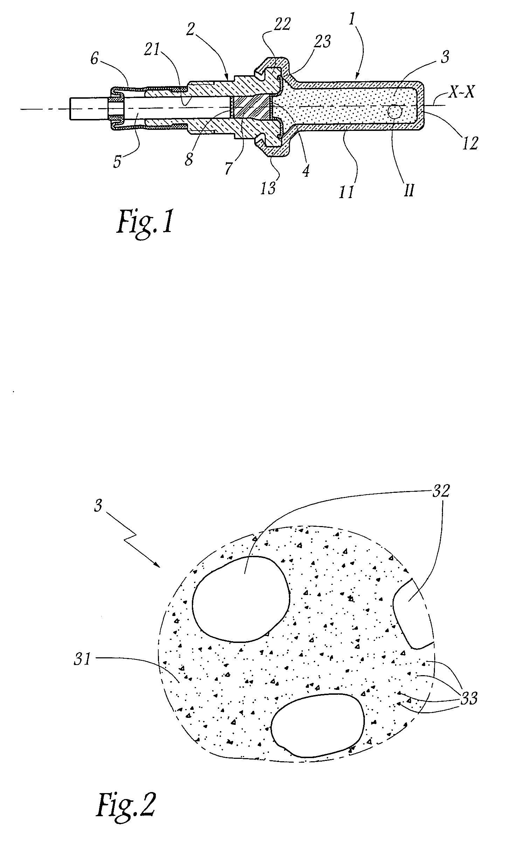

Sur la figure 1 est représenté un élément thermostatique comportant une coupelle externe métallique 1, présentant une bonne conductivité thermique, cette coupelle étant réalisée de préférence en cuivre pur ou allié. La coupelle a une partie courante tubulaire 11 présentant une forme générale cylindrique à base circulaire et d'axe longitudinal X-X. Une extrémité de fond 12 ferme cette partie 11, tandis que l'extrémité opposée s'épanouit pour se raccorder à une collerette 13. Un fourreau 2, ayant une forme de révolution avec un canal central 21, comprend une embase 22 logé à demeure, notamment par sertissage, dans la collerette 13, de telle sorte que, hormis l'embase 22, le fourreau 2 s'étend hors de la coupelle en direction opposée à la partie courante 11, en étant centré sur l'axe X-X.

La partie 11 de la coupelle 1 est remplie d'un mélange 3 détaillé ci-après, qui est très dilatable et contractile en fonction des variations de température, notamment autour d'une température fonctionnelle. L'embase 22 comporte, dans sa face en vis-à-vis de ce mélange, un logement annulaire 23 dans lequel est ancrée la périphérie d'un diaphragme 4 en forme de disque et déformable élastiquement, obturant le canal central 21 du côté de la coupelle 1. A l'intérieur de ce canal est logé un piston rigide 5, typiquement métallique, assujetti au mouvement de la région centrale du diaphragme, l'extrémité de ce piston opposée au diaphragme étant plus ou moins en saillie du fourreau en fonction du volume occupé par le mélange, donc de la température de ce dernier. Un soufflet tubulaire de protection 6 entoure une partie du fourreau 2 et du piston 5, ses extrémités étant par exemple immobilisées dans des gorges creusées dans le pourtour de ces deux pièces. Ce soufflet 6, sous la forme d'une membrane souple à déroulement, suit les mouvements du piston sans déformation plastique.

Le piston 5 est assujetti au mouvement de la région centrale du diaphragme 4 par l'intermédiaire, à la fois, d'un tampon 7 en élastomère déformable, en contact contre la surface du diaphragme opposée au mélange 3, et d'une rondelle polymère 8, tel que du PTFE, insérée entre le tampon et le piston et ajustée dans le canal 21 pour éviter l'extrusion de l'élastomère du tampon 7 autour du piston.

Comme représenté de manière schématique à la figure 2, le mélange 3 comporte à la fois :
- une matrice thermodilatable 31, c'est-à-dire une matrice ayant un coefficient de dilatation élevé, typiquement de l'ordre de 80.10⁻⁴/°C, pour des températures de service autour de la température fonctionnelle associée à l'élément thermostatique,
- une poudre de particules métalliques ou céramiques 32 dont les dimensions sont de l'ordre du dixième de millimètre, typiquement comprises entre 40 et 100 micromètres, et
- des nanotubes de carbone 33 présentant une structure atomique en forme de cylindre creux et fermé, dont le diamètre est de l'ordre de quelques nanomètres et d'au plus une cinquantaine de nanomètres.

En pratique, la matrice thermodilatable 31 est constituée d'une cire du type de celle utilisée dans les éléments thermostatiques actuels.

Les nanotubes de carbone 33 sont des nanotubes monofeuillets ou « à simple paroi » (désignés couramment « SWNT » correspondant à leur désignation anglaise « SINGLE WALL CARBON NANOTUBES ») et/ou des nanotubes multifeuillets ou « multi-parois » (désignés couramment « MWNT » correspondant à leur désignation anglaise « MULTI WALL CARBON NANOTUBES ») : la structure d'un nanotube de carbone monofeuillet peut être représenté par un feuillet d'atomes de carbone enroulé sur lui-même, avec un diamètre inférieur à 5 nm, et fermé à ses deux extrémités par une demi-sphère, tandis qu'un nanotube de carbone multifeuillet est constitué de plusieurs feuillets d'atomes de carbone enroulés les uns autour des autres, avec un diamètre compris entre 8 et 50 nm. En pratique, ces nanotudes de carbone ont une conductivité thermique de l'ordre de 4000 W/m.K et présentent une surface spécifique comprise entre environ 10 m²/g pour les nanotubes multifeuillets et environ 400 m²/g pour les nanotubes monofeuillets.

En fonctionnement, lorsque l'élément thermostatique passe d'un premier état dit « froid », dans lequel son mélange 3 présente une température homogène égale à la température T₀ du milieu extérieur, tel que de l'eau mélangée en sortie d'une cartouche de robinet mitigeur, à un état échauffé résultant d'une augmentation soudaine de la température du milieu extérieur jusqu'à une valeur T₁, un flux thermique se produit du milieu extérieur à la coupelle 1 et de la coupelle 1 vers le mélange 3, jusqu'à ce que, au bout d'une durée δ, l'élément thermostatique, en particulier son mélange 3, atteigne une température homogène égale à la nouvelle température chaude T₁ du milieu extérieur. La température du mélange 3 ayant augmentée de T₀ à T₁, la cire 31 se dilate et, comme l'ensemble coupelle 1/fourreau 2 n'est pas déformable, cette cire déforme, en se dilatant, le diaphragme 4, qui, à son tout, déforme le tampon 7, ce dernier translatant la rondelle 8 et le piston 5 dans le canal 21 du fourreau. Ainsi, une augmentation soudaine de la température du milieu extérieur entraîne la translation du piston 5 hors du fourreau 2, au bout de la durée δ, appelée en pratique « temps de réponse ».

Ce temps de réponse est d'autant plus court que le flux thermique vers la cire thermodilatable 31 est important. Comme le matériau de la coupelle 1 présente un bien meilleur coefficient de conduction thermique que celui de la cire, le flux thermique précité dépend essentiellement de la différence de température entre T₀ et T₁ et des caractéristiques thermiques du mélange 3, notamment de sa chaleur massique et de sa conductivité thermique.

Les nanotubes 33 accélèrent ce flux thermique et conduisent la chaleur au coeur de la matrice de cire 31 : d'une part, grâce au contact intime entre la cire et les nanotubes, ainsi qu'à la grande surface spécifique de ces nanotubes, la matrice est soumise à un flux thermique intense au niveau de chaque nanotube et, d'autre part, de proche en proche, les nanotubes amènent rapidement la chaleur dans les zones de la masse matricielle de la cire 31 les plus éloignées de la coupelle 1, en homogénéisant ainsi l'échauffement de la matrice de cire.

La présence combinée de la poudre de particules 32 et des nanotubes 33 permet une conduction de chaleur diffuse dans la cire 31.

Le temps de réponse de l'élément est ainsi considérablement réduit.

En variante non représentée, le mélange dilatable et contractile 3 n'est constitué que de la matrice thermodilatable 31 et des nanotubes 33, sans la présence de la poudre de particules 32. Selon cette variante, qui nécessite ainsi plus de nanotubes que l'élément envisagé aux figures 1 et 2, l'hystérésis de l'élément thermostatique est extrêmement faible, l'effet lubrifiant apporté par les nanotubes n'étant pas partiellement amoindri par d'autres constituants du mélange, tels que les particules 32 pour le mélange 3 de la figure 2.

Pour fabriquer un élément thermostatique conforme l'invention, on mélange intimement la matrice thermodilatable 31 et les nanotubes 33, ainsi que, le cas échéant, les particules de poudre 32. On rapporte ensuite ce mélange à l'intérieur de la coupelle 1, avant d'assembler les autres composants 2 et 4 à 8.

Divers aménagements et variantes aux éléments thermostatiques décrits ci-dessus sont bien entendus envisageables. A titre d'exemples :
- des nanotubes de nitrure de bore peuvent être incorporés au mélange 3, en complément ou en remplacement des nanotubes de carbone ; et/ou
- d'autres formes de réalisation présentant des dimensions différentes sont envisageables, notamment en fonction de l'application spécifique de l'élément thermostatique ; la coupelle 1 peut ainsi présenter des géométries très diverses.

## Revendications

1. Elément thermostatique, comportant une coupelle externe (1) contenant un mélange (3) dilatable et contractile en fonction du sens de variation de sa température, et un piston (5) mobile par rapport à la coupelle et couplé au mélange pour se déplacer en des sens opposés selon que le mélange se dilate ou se contracte,
**caractérisé en ce que** le mélange (3) comporte une matrice thermodilatable (31) et des nanotubes (33).

2. Elément thermostatique selon la revendication 1, **caractérisé en ce que** le mélange (3) comporte en outre une poudre de particules métalliques ou céramiques (32).

3. Elément thermostatique selon la revendication 1, **caractérisé en ce que** le mélange (3) est exclusivement constitué de la matrice thermodilatable (31) et des nanotubes (33).

4. Elément thermostatique selon l'une quelconque des revendications précédentes, **caractérisé en ce que** les nanotubes du mélange (3) comportent des nanotubes de carbone (33).

5. Elément thermostatique selon la revendication 4, **caractérisé en ce que** le diamètre de chaque nanotube de carbone (33) est inférieur à 50 nanomètres.

6. Elément thermostatique selon l'une des revendications 4 ou 5, **caractérisé en ce qu'**au moins certains des nanotubes de carbone (33) sont des nanotubes monofeuillets.

7. Elément thermostatique selon la revendication 6, **caractérisé en ce que** le diamètre de chaque nanotube de carbone monofeuillet est inférieur à 5 nanomètres.

8. Elément thermostatique selon l'une quelconque des revendications 4 à 7, **caractérisé en ce qu'**au moins certains des nanotubes de carbone (33) sont des nanotubes multifeuillets.

9. Elément thermostatique selon l'une quelconque des revendications précédentes, **caractérisé en ce que** les nanotubes du mélange (3) comportent des nanotubes de nitrure de bore.

10. Cartouche thermostatique ou robinet thermostatique, équipé d'un élément thermostatique conforme à l'une quelconque des revendications précédentes.
